# EUROPEAN PATENT APPLICATION

(11) **EP 4 318 324 A1**
(43) Date of publication of application: **07.02.2024**
(21) Application number: 22188926.4
(22) Date of filing: 05.08.2022
(51) Int. Cl.: G06N 3/084, H04L 41/16, G06N 3/09, G06N 3/091

(54) **APPARATUS, METHOD AND COMPUTER PROGRAM**

(71) Applicant: Nokia Technologies Oy, 02610 Espoo (FI)
(72) Inventor: LEHMANN, Gerald, 12101 Berlin (DE); GAJIC, Borislava, 82008 Unterhaching (DE); GOERGE, Jürgen, 82061 Neuried (DE)
(74) Representative: Nokia EPO representatives

(57) **Abstract**

There is disclosed a method. The method comprises, in response to a request from an inference consumer for inference data samples, obtaining inference data samples using a machine learning model. The method further comprises querying the obtained data samples to generate a filtered set of data samples. The method further comprises sending the filtered set of data samples to a training entity for training the machine learning model. The method further comprises sending the obtained inference data samples to the inference consumer.

## Description

### Field

This disclosure relates to communications, and more particularly to an apparatus, method and computer program in a wireless communication system. More particularly the present disclosure relates to training of machine learning models.

### Background

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying data for voice, electronic mail (email), text message, multimedia and/or content data communications and so on. Non-limiting examples of services provided include two-way or multi-way calls, data communication or multimedia services and access to a data network system, such as the Internet.

Since introduction of fourth generation (4G) services, increasing interest has been paid to the next, or fifth generation (5G) standard. 5G may also be referred to as a New Radio (NR) network. Developments in 5G include the introduction of artificial intelligence (Al) / machine learning (ML) capabilities.

### Statement of invention

According to a first aspect there is provided a method comprising: in response to a request from an inference consumer for inference data samples, obtaining inference data samples using a machine learning model; querying the obtained data samples to generate a filtered set of data samples; and sending the filtered set of data samples to a training entity for training the machine learning model; and sending the obtained inference data samples to the inference consumer.

According to some examples, the filtered set of data samples that are sent to the training entity comprise a sub-set of the obtained inference data samples that are sent to the inference consumer.

According to some examples, the training entity is a separate entity from the inference consumer.

According to some examples the method comprises receiving a subscription request from the training entity which defines one or more features, and the querying the obtained data samples comprises filtering for data samples that are in accordance with the one or more features.

According to some examples the subscription request comprises an indication of a query function to be used for the querying.

According to some examples the method comprises sending an indication of supported active learning functionality to the training entity, in response to the subscription request.

According to some examples the method comprises sending to the training entity an indication of how useful each data sample is expected to be for re-training of the machine learning model.

According to some examples, the indication of how useful each data sample is expected to be comprises a single value or a vector of values.

According to some examples the method comprises notifying the training entity when enough new data samples are available such that re-training of the machine learning model is advised.

According to some examples the method comprises performing uncertainty sampling, and wherein the querying the obtained data samples comprises filtering for samples that equal or exceed an uncertainty threshold.

According to some examples, the method is performed by an apparatus comprising an inference producer.

According to some examples the inference consumer comprises a network function.

According to some examples, the network function is in communication with a network data analytics function.

According to a second aspect there is provided an apparatus comprising means for performing the method of the first aspect.

According to a third aspect there is provided an apparatus comprising: means for, in response to a request from an inference consumer for inference data samples, obtaining inference data samples using a machine learning model; means for querying the obtained data samples to generate a filtered set of data samples; means for sending the filtered set of data samples to a training entity for training the machine learning model; and means for sending the obtained inference data samples to the inference consumer.

According to some examples, the filtered set of data samples that are sent to the training entity comprise a sub-set of the obtained inference data samples that are sent to the inference consumer.

According to some examples, the training entity is a separate entity from the inference consumer.

According to some examples the apparatus comprises means for receiving a subscription request from the training entity which defines one or more features, and the querying the obtained data samples comprises filtering for data samples that are in accordance with the one or more features.

According to some examples the subscription request comprises an indication of a query function to be used for the querying.

According to some examples the apparatus comprises means for sending an indication of supported active learning functionality to the training entity, in response to the subscription request.

According to some examples the apparatus comprises means for sending to the training entity an indication of how useful each data sample is expected to be for re-training of the machine learning model.

According to some examples, the indication of how useful each data sample is expected to be comprises a single value or a vector of values.

According to some examples the apparatus comprises means for notifying the training entity when enough new data samples are available such that re-training of the machine learning model is advised.

According to some examples the apparatus comprises means for performing uncertainty sampling, and wherein the querying the obtained data samples comprises filtering for samples that equal or exceed an uncertainty threshold.

According to some examples, the apparatus comprises an inference producer.

According to some examples the inference consumer comprises a network function.

According to some examples, the network function is in communication with a network data analytics function.

According to a fourth aspect there is provided an apparatus comprising at least one processor; and at least one memory including computer program code; the at least one memory and the computer program code configured to, with the at least one processor, cause the apparatus at least to perform: in response to a request from an inference consumer for inference data samples, obtaining inference data samples using a machine learning model; querying the obtained data samples to generate a filtered set of data samples; sending the filtered set of data samples to a training entity for training the machine learning model; and sending the obtained inference data samples to the inference consumer.

According to a fifth aspect there is provided a computer program comprising instructions for causing an apparatus to perform at least the following: in response to a request from an inference consumer for inference data samples, obtaining inference data samples using a machine learning model; querying the obtained data samples to generate a filtered set of data samples; sending the filtered set of data samples to a training entity for training the machine learning model; and sending the obtained inference data samples to the inference consumer.

According to a sixth aspect there is provided a computer program comprising instructions stored thereon for performing at least the following: in response to a request from an inference consumer for inference data samples, obtaining inference data samples using a machine learning model; querying the obtained data samples to generate a filtered set of data samples; and sending the filtered set of data samples to a training entity for training the machine learning model; and sending the obtained inference data samples to the inference consumer.

According to a seventh aspect there is provided a non-transitory computer readable medium comprising program instructions for causing an apparatus to perform at least the following: in response to a request from an inference consumer for inference data samples, obtaining inference data samples using a machine learning model; querying the obtained data samples to generate a filtered set of data samples; and sending the filtered set of data samples to a training entity for training the machine learning model; and sending the obtained inference data samples to the inference consumer.

According to an eighth aspect there is provided a non-transitory computer readable medium comprising program instructions stored thereon for performing at least the following: in response to a request from an inference consumer for inference data samples, obtaining inference data samples using a machine learning model; querying the obtained data samples to generate a filtered set of data samples; and sending the filtered set of data samples to a training entity for training the machine learning model; and sending the obtained inference data samples to the inference consumer.

According to a ninth aspect there is provided a method comprising: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

According to some examples the subscription request comprises an indication of a query function to be used by the inference entity for obtaining the data samples.

According to some examples the method comprises communicating with a label source entity, for labelling of data samples.

According to some examples the method comprises receiving information of parameters comprising one or more of: maximum number of annotated samples to be generated; minimum number of annotated samples to be generated; performance target of the machine learning model; an indication of whether the re-training of the machine learning model should be forced; a list of addresses or identifiers indicating inference producers deploying an up-to-date version of the machine learning model.

According to some examples, re-training of the machine learning model is stopped when the performance target is met.

According to some examples the method comprises receiving the data samples produced by the inference entity either directly from the inference entity, or via a data storage function.

According to some examples the method comprises receiving information indicating where in the data storage function the data samples are stored.

According to some examples the method comprises obtaining the data samples from the data storage function, using the information indicating where in the data storage function the data samples are stored.

According to some examples, the feature set comprises information of one or more network conditions.

According to some examples the feature set comprises one or more of: received signal strength indicator; user equipment mobility; data rate of one or more user equipment.

According to some examples the method is performed by a training producer entity.

According to a tenth aspect there is provided an apparatus comprising means for performing the method of the ninth aspect.

According to an eleventh aspect there is provided an apparatus comprising: means for sending a subscription request to an inference entity for data samples to be used in re-training a machine learning model, the subscription request comprising a feature set for the data samples; means for querying data samples received from the inference entity to generate a filtered set of data samples; means for re-training the machine learning model using the filtered set of data samples.

According to some examples the subscription request comprises an indication of a query function to be used by the inference entity for obtaining the data samples.

According to some examples the apparatus comprises means for communicating with a label source entity, for labelling of data samples.

According to some examples the apparatus comprises means for receiving information of parameters comprising one or more of: maximum number of annotated samples to be generated; minimum number of annotated samples to be generated; performance target of the machine learning model; an indication of whether the re-training of the machine learning model should be forced; a list of addresses or identifiers indicating inference producers deploying an up-to-date version of the machine learning model.

According to some examples, the apparatus comprises means for stopping re-training of the machine learning model when the performance target is met.

According to some examples the apparatus comprises means for receiving the data samples produced by the inference entity either directly from the inference entity, or via a data storage function.

According to some examples the apparatus comprises means for obtaining the data samples from the data storage function, using the information indicating where in the data storage function the data samples are stored.

According to some examples, the feature set comprises information of one or more network conditions.

According to some examples the feature set comprises one or more of: received signal strength indicator; user equipment mobility; data rate of one or more user equipment.

According to some examples the apparatus comprises a training producer entity.

According to a twelfth aspect there is provided an apparatus comprising at least one processor; and at least one memory including computer program code; the at least one memory and the computer program code configured to, with the at least one processor, cause the apparatus at least to perform: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

According to a thirteenth aspect there is provided a computer program comprising instructions for causing an apparatus to perform at least the following: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

According to a fourteenth aspect there is provided a computer program comprising instructions stored thereon for performing at least the following: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

According to a fifteenth aspect there is provided a non-transitory computer readable medium comprising program instructions for causing an apparatus to perform at least the following: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

According to an sixteenth aspect there is provided a non-transitory computer readable medium comprising program instructions stored thereon for performing at least the following: sending a subscription request to an inference entity for data samples to be used in re-training a machine learning model, the subscription request comprising a feature set for the data samples; querying data samples received from the inference entity to generate a filtered set of data samples; and re-training the machine learning model using the filtered set of data samples.

### Brief description of Figures

The invention will now be described in further detail, by way of example only, with reference to the following examples and accompanying drawings, in which:
Figure 1 shows a schematic example of a wireless communication system where the disclosure may be implemented;
Figure 2 schematically shows an active learning loop;
Figure 3 schematically shows an ML training model according to current practice;
Figure 4 schematically shows system architecture for training of an ML model, according to the disclosure;
Figure 5 schematically shows system architecture for training of an ML model, according to an example of the present disclosure;
Figure 6 is a signalling diagram according to an example of the present disclosure;
Figure 7 schematically shows system architecture for training of an ML model, according to the disclosure;
Figure 8 is a signalling diagram according to an example of the present disclosure;
Figure 9 schematically shows system architecture for training of an ML model, according to an example of the present disclosure;
Figure 10 is a signalling diagram according to an example of the present disclosure;
Figure 11 schematically shows parts of a user equipment according to an example;
Figure 12 schematically shows parts of a network apparatus according to an example;
Figures 13 to 14 are method flow charts according to some examples;
Figure 15 shows a schematic representation of a non-volatile memory medium storing instructions which when executed by a processor allow a processor to perform one or more of the steps of the methods of some embodiments.

### Detailed description

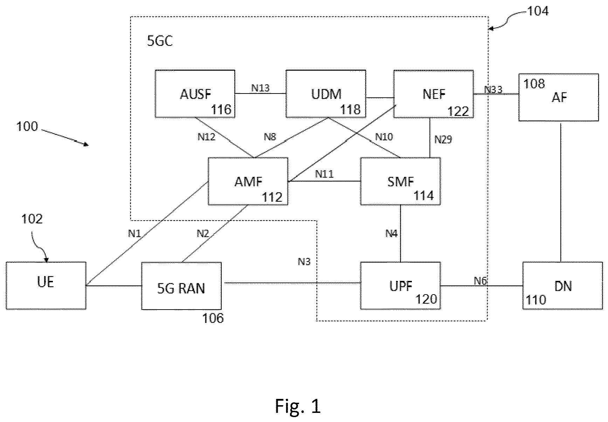

Figure 1 shows a schematic representation of a 5G system (5GS) 100. The 5GS may comprise a device 102 such as user equipment or terminal, a 5G access network (5G-AN) 106, a 5G core network (5GC) 104, one or more network functions (NF), one or more application function (AF) 108 and one or more data networks (DN) 110.

The 5G-AN 106 may comprise one or more gNodeB (gNB) distributed unit functions connected to one or more gNodeB (gNB) centralized unit functions.

The 5GC 104 may comprise an access management function (AMF) 112, a session management function (SMF) 114, an authentication server function (AUSF) 116, a user data management (UDM) 118, a user plane function (UPF) 120, a network exposure function (NEF) 122 and/or other NFs. Some of the examples as shown below may be applicable to 3GPP 5G standards. However, some examples may also be applicable to 6G, 4G, 3G and other 3GPP standards.

In a communication system, such as that shown in Figure 1, mobile communication devices/terminals or user apparatuses, and/or user equipment (UE), and/or machine-type communication devices are provided with wireless access via at least one base station or similar wireless transmitting and/or receiving node or point. The terminal is provided with an appropriate signal receiving and transmitting apparatus for enabling communications, for example enabling access to a communication network or communications directly with other devices. The communication device may access a carrier provided by a station or access point, and transmit and/or receive communications on the carrier.

Artificial intelligence (Al) and machine learning (ML) are expected to play a role in ongoing and future 5G deployments. The management of AI/ML supported network functions and analytics as specified in 3GPP standards include the support of supervised learning (SL), where training data (also often named as "ground truth" or "reference data") is needed, having information (which may be referred to as label information) from which an ML algorithm can learn. The provision of representative training data contributes to the later performance of the trained model when the trained model is applied in "inference mode". Or in other words, the selection of labelled data samples to be used for training impacts the performance of the model. When in inference mode, the trained model can run data or data points through the model for generating predictions or descriptions (i.e. make inferences from received data).

The "inference mode" i.e. using a trained model for obtaining information is an existing standardized procedure. For example, for the 5G mobile communication system (according to 3GPP TS 23.288), the "Network Analytics Exposure" (inference) is organized in a way that any Network Function (NF) can subscribe or request analytics information from the Network Data Analytics Function (NWDAF). The NWDAF contains the Analytics logical function (AnLF), which performs the inference using a trained model.

Active Learning (AL) is a sub-set of machine learning in which a learning algorithm can interactively query an information source to label new data points with desired outputs. For a further discussion of AL, see for example "Settles, Burr (2010). "Active Learning Literature Survey"; Computer Sciences Technical Report 1648. University of Wisconsin-Madison". In this context AL algorithms/techniques were developed which perform incremental and intelligent selection of data samples, which are then labelled (or annotated), and added to the training data set. The extended training data set is then used for re-training of a SL model, and data from the inference with the newly trained model can be used to perform a further selection of data samples to be used next for labelling and training.

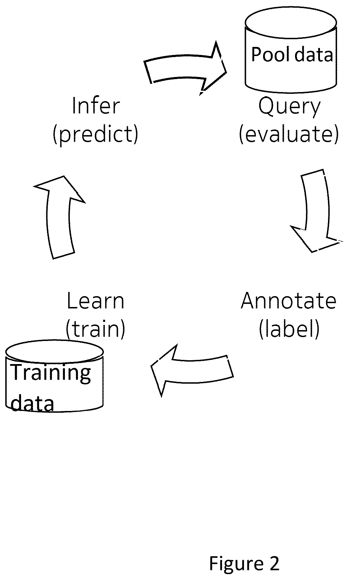

In summary, Active Learning techniques enable an efficient continuous improvement of supervised learning models, while only a reduced number of data samples need to be labelled, reducing the labelling (annotation) effort, since labels can often only be obtained in a costly manner, in particular when labour (e.g. a domain expert has to review and label the samples) is needed. In a typical Active Learning loop, unlabelled data samples from inference are fed into a query algorithm, which selects the next samples to be used for training. Figure 2 schematically shows an example Active Learning loop.

Active Learning may allow a faster convergence to a maximum achievable performance in re-training/model-adaptation scenarios. For 5G systems, AL supports efficient setup, where an initial and perhaps versatile SL model is provided by a network vendor, and this model can then be adapted quickly to deployment specifics using inference data and AL techniques.

A problem identified in the present disclosure is that during inference mode, which is e.g. triggered by a network analytics information request issued by a Analytical Function (AF) to NWDAF, a lot of potentially new data samples may be received and/or processed, and at least some of that data may be useful for re-training of the model, and should therefore be labelled and added to the training set. However, using all inference data samples for retraining generates a high computational effort for data labelling, data provision (signalling) and model training, and this effort may not be feasible in environments with limited resources (such as memory and processing capabilities).

In a case where re-training/model adaptation is performed at a device or entity with low processing power or limited energy ( UEs, by way of non-limiting example), the amount of data used for re-training and the time needed for an AI/ML model to converge towards the maximum performance may be important and should be minimized.

It has been identified in the present disclosure that in order to optimize the re-training, it may be necessary to reduce the number of training samples, by extracting the most supporting data samples for re-training from all data samples (pool samples) that have been used for inference.

The present disclosure identifies that deploying Active Learning techniques may overcome or at least mitigate this problem.

Active Learning supports a reduction of the number of training samples. However, Active Learning requires extraction of data samples most useful for training from all data samples (pool samples) that have been used for inference. As a consequence, all pool samples used for inference must be available at the location of the Active Learning Function. In a case where the inferencing evaluates a large amount of data and is performed at devices with low processing power (e.g. a UE), a problem faced by Active Learning is: on one hand the device does not have enough processing power to perform the AL query function and the re-training of the AI model. Therefore, the re-training cannot be performed on the device but must be hosted on another node, such as a central processing node. On the other hand, it is not technically or economically feasible to transfer all data used for inferencing towards the central processing node. For example, in a case where a UE uses a ML model to control the scheduler or to predict the signal strength to prepare for handover, it may not be possible to transfer all data relevant for inferencing to the central system that performs the Active Learning.

Some features proposed in the present disclosure are shown in the table below.

| **Requirement label** | **Description** | **Related use case(s)** |
|---|---|---|
| **REQ-AIML_UPD-CON-3** | The AI/ML MnS producer should have a capability to update the AI/ML entities and inform an authorized consumer about the update status. | AI/ML entities updating initiated by producer |

**REQ-AI/MLUPDATE-1** the 3GPP management system shall have a capability for the AI/ML training producer to request from the AI/ML inference producer the most supporting data samples for re-training from all data samples (pool samples) that have been used for AI/ML inference.
**REQ-AI/MLUPDATE-1** the 3GPP management system shall have a capability for the AI/ML inference producer to provide to the AI/ML training producer the most supporting data samples for re-training.

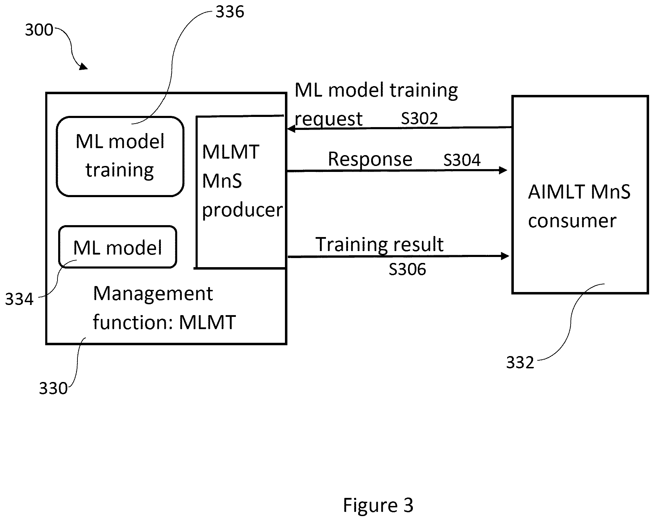

The current status of 5G specifications do not support an efficient usage/deployment of Active Learning techniques. Closure of the Active Learning loop, where data and indications from inference (model application) are needed by an AL query algorithm is not foreseen in the current version of the standards. By way of background, Figure 3 schematically shows a current ML training model (see also 3GPP TS28.105 v2.0.0). The system 300 shown in Figure 3 comprises a management function 330 in the form of a machine learning model training (MLMT) MnS (management services) producer, and an MLMT MnS consumer. As shown schematically in Figure 3, the MnS producer comprises an ML model 334, and functionality for ML model training schematically shown at 336. An exemplary method is as follows. The MLMT may also be referred to as an AIMLT (Artificial Intelligence Machine Learning Training).

At S302, the AIMLT MnS consumer 332 sends an ML model training request to MnS producer 330. For example, this may be a request for the MLMT producer 330 to perform training of the ML model 334.

At S304, the MnS producer 330 sends a response to the AIMLT MnS consumer 332. For example, the response may be an acknowledgement of the training request, and may indicate whether the request was accepted.

At S306, the MnS producer 330 sends a training result to the AIMLT MnS consumer 332. As disclosed in 3GPP TS28.105 v2.0.0, the MnS producer may provide the training results (including the location of the trained AI/ML Entity, etc.) to the AIMLT MnS consumer(s).

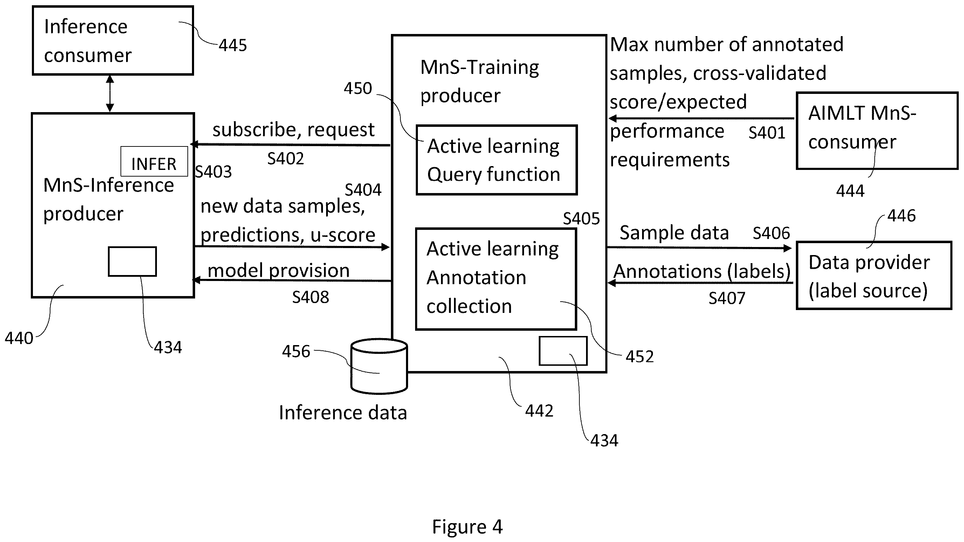

Some example embodiments according to the present disclosure will now be described with respect to Figures 4 to 10.

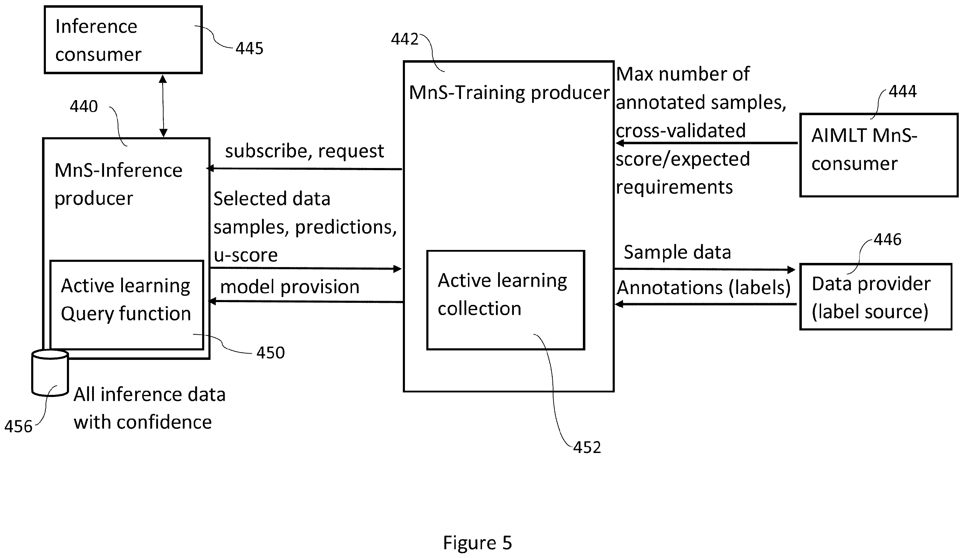

Figures 4 and 5 schematically show parts of a communication system comprising an inference entity or inference producer 440, an inference consumer 445, a training entity or training producer 442, a consumer entity (e.g. an AIMLT MnS consumer) 444, and a data provider entity 446.

The inference producer 440 is configured to perform inferencing or predicting of information, for example using an ML model 434. By way of non-limiting example, the inference producer 440 can use the ML model 434 to provide predictions of network conditions including: signal strength in an area; load etc. To this end the ML model 434 may use a model structure trained by a Machine Learning algorithm (e.g. in a simple form a look-up-table (LUT)), and provide predictions based on data that has been input into the ML model 434 during an earlier training phase. For example, the ML model may be trained based on input data such as signal strength in an area; mobility speed of user devices; network signal strength; bandwidth; load etc, which are again provided as non-limiting examples

The training producer 442 is, in some examples, configured to control and perform training of the ML model 434. For example, and as will be discussed in more detail below, the training producer 442 is configured to perform training (which may be initial or subsequent training) of the model 434. In some ways, it may be considered that the training producer 442 conducts or orchestrates training of the ML model 434. In some examples, and as shown in Figure 4, there may be at least two models 434. For example the ML model may be located in and trained in training producer 442. The trained model may then be transferred to the inference producer 440 (e.g. S408), for storage therein. In some examples the training producer may be considered to comprise the combination of AL query function 450 and AL annotation collection 452 ("training functions"). The training producer 442 may interface with MnS consumer 444 (e.g. S401) to request and control training functions.

An inference consumer entity 445 is shown schematically. The inference consumer 445 has an interface with inference producer 440. In some examples, the inference consumer 445 has no interface with training producer 442. Accordingly in some examples it may be considered that the inference consumer 445 is a separate entity from the training producer 442. The consumer entity 445 may be considered an entity that wants or requires information from the inference producer 440. For example, the consumer 445 may require data samples from inference producer 440 for one or more tasks that the inference consumer 445 needs to perform. By way of non-limiting example, the consumer entity 445 may require information of network conditions, for example load predictions, in order to perform load-balancing operations. In some examples, the inference consumer entity 445 may comprise a network function (NF). In some examples, the inference consumer entity 445 may comprise a network function (NF) that is in communication with or subscribing to NWDAF.

The AIMLT MnS consumer 444 is configured to control the learning functions of the system, in some examples. For example, the AIMLT MnS consumer 444 is configured to set parameters for learning, which can be sent to training producer 442. In some examples AIMLT MnS consumer 444 may be termed a training control entity. In some examples AIMLT MnS consumer 444 may be considered a training consumer. In some examples the AIMLT MnS consumer 444 is part of the same entity as the inference producer 440. In other words, it is possible that the inference producer 440 acts as an AIMLT MnS consumer 444

The data provider entity 446 may be considered an entity that provides information to assist the training producer entity 442. For example, the data provider 446 may be, or be in communication with, a human expert who assists with labelling data samples that are needed for a re-training of the model.

An active learning query function is schematically shown at 450. A main task of the AL query function 450 is to identify (e.g. filter, extract) data samples which are most useful when being labelled and added to training data to be used for re-training a model. In order to get access to new data samples, the query function may generate requests for information from the inference producer 440 which is using ML model 434 for inference. The query function 450 may be configured to perform filtering of information received from the inference producer 440. For example, the query function 450 may be configured to filter the number of data samples that are forwarded to the data provider 446. To this end the query function 450 may use an AL query algorithm with its parameters for identifying (filtering) data samples to be use for re-training. In the example of Figure 4, the query function 450 is located in the training producer 442. In the example of Figure 5, the query function 450 is located in the inference producer 440. Also a split of the query function 450, having parts in the inference producer 440 and in training producer 442 provides an efficient set-up. That is in some examples functionality of query function 450 may be distributed between inference producer 440 and training producer 442.

An active learning collection function is schematically shown at 452. The AL collection function 452 is configured to manage the storage of information obtained from the AL process, such as data sample and labels to be used for re-training a model. In some examples, the active learning collection function is configured to collect data samples and corresponding labels/annotations from the inference producer 440. For example, data samples could include measurements of signal strength, number of active UEs, configuration parameters which form a data sample, and this may be used to predict the label UL throughput value. In some examples, samples may be stored in collection function 452 before being forwarded to data provider 446. In some examples, labelled data samples received from the data provider 446 may be stored at the collection function 452. In some examples, the collection function 452 is stored at the training producer entity 442.

A store of inference data is schematically shown at 456. For example, the store of inference data 456 may be stored in a memory. The store of inference data 456 is configured to store data samples obtained during the inference procedure. In some examples the store of inference data 456 is stored at the training producer entity 442 (Figure 4). In some examples the store of inference data 456 is stored at the inference producer entity 440 (Figure 5).

An example method will now be described with respect to Figure 4.

At S401, AIMLT MnS consumer entity 444 sends a request to training producer entity 442. For example, the request at S401 may be a request for information that the consumer entity 444 requires or wants, to perform a task. In some examples this request could also trigger the training or re-training of a AI/ML model targeting a specific case, e.g. UL throughput prediction. In examples, the request at S401 can be enriched or supplemented with one or more parameters. The one or more parameters may, to some extent, control the active learning process. For example, the one or more parameters could include any one or more of:
- An upper limit or maximum number of annotations, that means the maximum number of data samples for which label information can be requested during a re-training process. (max_number_of_annotated_samples)
- A lower limit or minimum number of annotated data samples that are needed in order to start a re-training. (min_number_of_annotated_samples)
- A performance target. For example, the performance target could be a cross-validated performance score e.g. an accuracy or "f1-score". The performance target may therefore define an accuracy threshold requirement for the information that the AIMLT MnS consumer 444 wants. For example, for a particular task, the AIMLT MnS consumer 444 may require very high accuracy information. For other tasks, lower accuracy information may be acceptable. In some examples this performance target could be used to control the model re-training in a way that once the performance target is reached, the model re-training process is stopped.

- An indication whether the re-training and therefore the collection of new data samples should be forced or not. In some examples, by "forced" is meant that inference should be carried out simply for the purpose of getting new training data. Therefore in some examples "not forced" is meant that training data can be obtained as a by-product of data obtained e.g. in response to a request from inference consumer 445 (as described in more detail elsewhere). This may also be termed obtaining the data in a passive manner. In some examples, the default is "not forced".
- A list of addresses or IDs pointing to inference producers deploying the current or up-to-date version of the model (in case of initial training this list has to be empty)

In some examples, these parameters may define whether active learning is activated or not, e.g. if the maximum number of annotations is set to zero, active learning is not activated/ is disabled.

At S402, the training producer 442 sends a request, which in some examples may be a subscription request, to inference producer 440 indicating an interest for data samples used for inference. In examples, the content of the request at S402 is dependent on the content of the request at S401. For identifying and addressing the right inference producers, the training producers can use the address information given in the request sent at S401 and/or could deploy a discovery function or use other available service discovery approaches.

At S403, the inference producer 440 performs an inference procedure, using the ML model. For example, the inference producer 440 produces one or more data samples based on a request from inference consumer entity 445.

At S404, the inference producer 440 sends information to the training producer 442 in response to the subscription request. For example, the inference producer 440 sends data samples to the training producer 442. In some examples, the data samples comprise one or more predictions. At S404, the inference producer 440 sends information to the training producer 442 in response to the subscription request. For example, the inference producer 440 sends data samples to the training producer 442. In some examples, the data samples comprise one or more predictions pertaining to information that the consumer AIMLT 444 has requested (e.g. predictions of network conditions) e.g. in the subscription request. It is to be noted that the AIMLT MnS consumer 444 controls the learning function only, in this example. The AIMLT MnS consumer 444 does not, in this example, request inference data directly from inference producer 440. Rather, the inference consumer 445 may request inference data directly from inference producer 440. In some examples, the inference consumer 445 has no interface with the training producer 442.

In some examples, each data sample sent to the training producer 442 may comprise a "usefulness score" or "u-score". The usefulness score comprises a value ranking (e.g. a percentage or a score from 0 to 100, or a value ranging from 0.00 to 1.00) or a vector of these values, ranking the data samples for their usefulness for further training of the ML model 434. This can result in more efficient future training, since the training producer 442 can use the most useful data samples for future training and discard less useful data samples. In some examples a calculation of the usefulness score is conducted by the AL query function 450. By way of example only, if the training producer 442 wants to use the ML model 434 for obtaining information relating to UE mobility, then data samples pertaining to UE mobility will be enriched by a usefulness score.

In some examples, uncertainty sampling is used as an AL query function. Some ML models can output a probability or confidence value (which again could be expressed as a percentage, for example) for inferred data samples. For example, this gives an indication of how reliable a prediction for a data sample is. This can give an indication of data sample types of which the ML model 434 is most unsure, and can provide an indication as u-score to training producer 442 of where ML model training should be focused. In some examples, the AL query function 450 located at inference producer 440 is configured to perform the uncertainty sampling.

At S405, data samples and their labels or annotations can be stored in annotation collection entity 452.

In some examples, at S406, selected sample data is sent to data provider 446. For example, in case uncertainty sampling is used as AL query function, data which has a low confidence value may be sent to data provider 446. An expert (for example a human expert) may then analyse and label those data samples.

At S407, annotations for the data sent at S406 are sent back to the training producer 442, where they can be stored and used for (re-) training.

S408 shows training producer 442 provisioning inference producer 440 with the (maybe re-trained) ML model, to be used for inference. S408 may, in some examples, be a pre-cursor to steps S401 to S407. S408 may also occur at other times, for example when sending an updated ML model to inference producer 440.

The process shown in Figure 5 is similar to that shown in Figure 4. It will be noted that in the embodiment of Figure 5 the AL query function is located in the inference producer 440 rather than in the training producer 442. Also, in the embodiment of Figure 5 the inference data store 456 is stored in the inference producer 440 rather than in the training producer 442.

In 3GPP SA5 context (e.g. MDAS) the Active Learning Query Function 450 and the Active Learning Collection Function 452 might be modelled as Information Object Class. By using the provisioning MnS, a management system is able to configure for the Active Learning Query Function 450 and for the Active Learning Collection Function the targets and / or other parameters that are relevant for the Active Learning cycle. For example, the training producer 442 might use the provisioning MnS to configure the Active Learning Query Function 450 and to create a subscription for inference data (e.g. the subscription which is sent at S402).

In 3GPP SA2 context, the subscription and the delivery of inference data may be handled by signalling messages between network functions as defined by 3GPP SA2, e.g. between NWDAF AnLF (analytics function) and NWDAF MTLF (model training logical function). However, in some examples, the same parameters may have to be exchanged as in the management case. Further, the management aspect may also be applicable for the NWDAF, even if the subscription and the exchange of data is handled by signalling between e.g. NWDAF MTLF and NWDAF AnLF, still certain parameters of Active Learning Query Function and Active learning Collection Function might or will be configured by OAM.

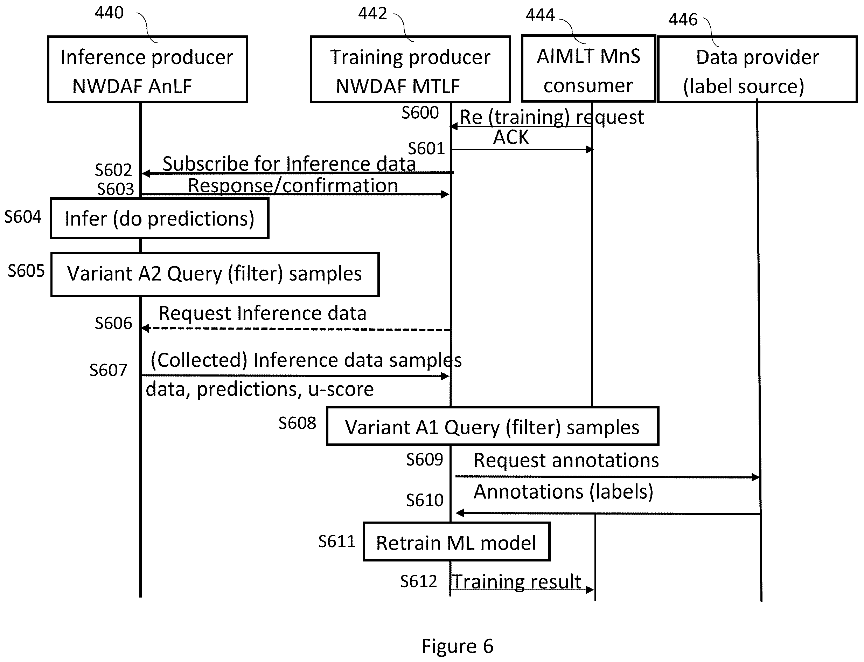

Figure 6 is a signalling diagram showing signalling between inference producer 440, training producer 442, and data provider 446, according to an example.

At S600, the training producer 442 receives a request from a AIMLT training consumer 444 for performing a (re-) training of the machine learning model (similarly as described for S401).

At S601, the training producer 442 sends an acceptance/acknowledgement response to the AIMLT MnS consumer 444. This is analogous to S304 of Figure 3.

At S602, the training producer 442 sends a subscription request for inference data to inference producer 440. By way of example only, the subscription request may include the parameters "minimum_number_samples [opt.], feature_set [opt], query algorithm ID [opt], query algorithm parameter set [opt]". With message S601 the training stage / producer 442 informs the inference stage / producer 440 that Active Learning is deployed, and the inference samples need to be inspected by the AL query function before they are potentially deleted. An optional parameter minimum_number_samples specifies a minimum number of selected training samples to be identified by the query function located at inference producer 440, before a response message is to be sent from the inference producer 440 to the training producer 442. An optional parameter query "algorithm ID" and an associated algorithm parameter set may specify a query algorithm to be used by the query function 450. For example, the query function 450 may store a plurality of query algorithms, and the parameter "algorithm ID" specifies which of those algorithms to use. If the algorithm ID is not specified or the given algorithm is not supported, a default algorithm may be used. An optional parameter "feature_set" may specifiy the features (data values) of the inference data to be reported (i.e. what data samples the training producer 442 wants). The subscription message can also be used for de-activation/de-subscription.

At S603, inference producer 440 replies with a response or confirmation. This message confirms the activation or de-activation of Active Learning and optionally reports the selected query algorithm and the parameters of the query algorithm being used/activated.

It is to be noted that prior to messages S602 and S603, in some examples a discovery request/response message pair may be used between inference producer 440 and training producer 442, which informs the training producer 442 which algorithms and AL-related functionality are supported by the inference entity 440.

Then, at S604, the inference producer 440 performs inferencing (e.g. carries out predictions). For example, this may be in response to a request from inference consumer 445.

In one variant (variant "A2"), which corresponds to the embodiment of Figure 5, the query function which is located in the inference producer 440 queries the data samples that have been inferred from the inferring stage in S605. For example, the querying of the data samples may comprise filtering the data samples. For example, the filtering may comprise filtering down to the most significant or useful samples that are related to the subscribed inference data.

Optionally, at S606, the training producer 442 sends a request for the inference data to the inference producer 440. For example, the request at S605 may be a request for immediate provision of inference data from the inference producer 440. Assuming that the training producer 442 is triggered to perform re-training in any case, the training producer 442 can request the (perhaps already pre-filtered in case of embodiment "A2") samples to be used for re-training.

At S607, the training producer 442 receives or collects inference data samples from the inference producer 440, in response to message S602 and/or message S606. In some examples the data samples may be sent in the form (sample ID, data (e.g. features), predictions, usefulness score (u-score)). According to some examples, the data to be sent at S607 comprises all features available for inference, and in some examples even those which are currently not used by the ML model. If a feature set was provided in message S602, then the provided data may be reduced to the given feature set.

In some examples, following uncertainty sampling, query algorithm parameters sent in S602 could include a threshold representing an uncertainty threshold (e.g. a threshold percentage), where samples being forwarded to training producer 442 must have an uncertainty equal or higher to this threshold. This subsequently causes the training producer to perform training on difficult to classify samples, ultimately resulting in a better and more accurate ML model. In another variant, a sample portion size is given as a query algorithm parameter. For example, the portion size parameter may be a percentage. For example, a portion size parameter of 5% would mean that 5% of samples with highest uncertainty are forwarded/reported. In an example case where the minimum number of samples is set to 5, inference for 100 samples would then need to be performed before the 5 most uncertain samples are forwarded/reported. It is to be noted that the present disclosure is not limited to a specific query algorithm, and different algorithms may be required for different parameters that are requested. Accordingly, the u-score may also vary dependent on context (e.g. a data sample that is highly useful in one context may be less useful in another context, and vice versa).

S608 shows a "variant A1" where the query function 450 is located at the training producer 442 (see for example Figure 4). Therefore, in some examples, at S608 the query function performs filtering of the inference data samples collected at S607. That is, a query algorithm is used to perform filtering of the data samples at S608. In some examples querying is performed only at S605 (variant A2) or S608 (variant A1). In some examples, querying of data samples is performed at both S605 and S608 (i.e. query function 450 is located at both inference producer 440 and training producer 442). Therefore, in some examples it may be considered that the query function 450 can be distributed between the inference producer 440 and the training producer 442.

Optionally, at S609, the training producer 442 can request annotations from data provider 446 for the filtered data samples.

Then, at S610 the training producer 442 receives annotations for those data samples.

As shown at S611, the training producer 442 then performs re-training of the model using the data samples that have been provided by the inference producer 440 and annotations provided by the data provider 446.

At S612 a training result is sent from training producer 442 to AIMLT MnS consumer 444. This is analogous to S306 of Figure 3.

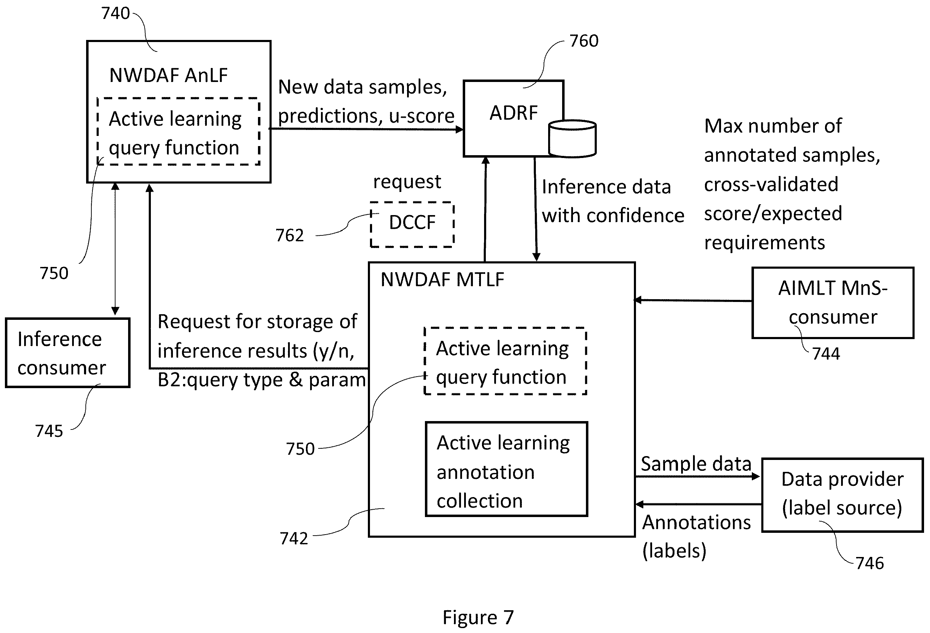

Figure 7 shows an embodiment in 3GPP SA2 context. In the system 700 of Figure 7 the inference producer 740 is in the form of an NWDAF AnLF (analytics function), and the training producer 742 is in the form of an NWDAF MTLF (model training logical function). The AIMLT MnS consumer is shown schematically at 744 and the data provider is shown schematically at 746. Also shown is an Analytics Data Repository Function (ADRF) 760, as standardized in 3GPP TS23.288, and/or a Data Collection Coordination Function (DCCF) 762, as also standardized in 3GPP TS23.288. The ADRF 760 and DCCF 762 are logically located between inference function 740 and training function 742. In some examples, data routed between the inference function 740 and the training function 742 can be stored at the ADRF 760 and/or the DCCF 762. In the example of Figure 7 the AL query function 750 could either be located at the entity performing training 742 (e.g. NWDAF MTLF) or at the entity performing inference 740 (e.g. NWDAF AnLF), or partly in both entities. The splitting of the query function 750 allows an efficient deployment of AL adapted to processing power constraints and/or data signalling capacities of involved entities. For example, data samples can be already pre-filtered at the entity performing inference 740 with a light-weight algorithm reducing data load to be signalled, while the final filtering of inference samples can be performed at the entity performing training 742, perhaps using a more resource-demanding algorithm.

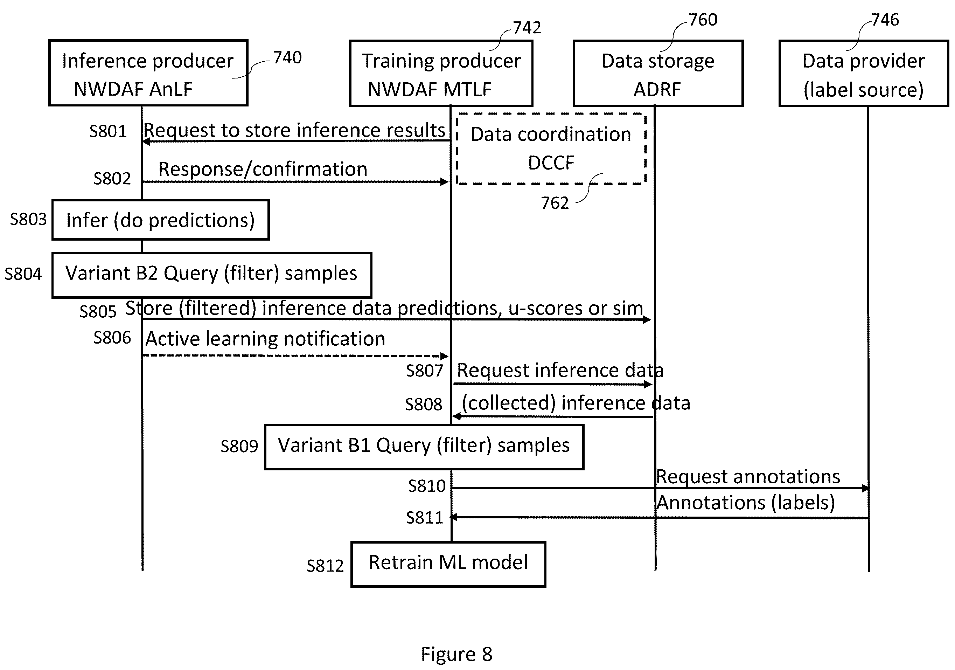

A signalling diagram showing message flow between inference producer 740, training producer 742, data storage 760 and data provider 746 is schematically shown in Figure 8. At least some of the messaging is in common with that shown in the signalling diagram of Figure 6. For common messaging, the information provided with respect to Figure 6 is equally applicable to the embodiment of Figure 8.

At S801, the training producer 742 sends a subscription request for inference data to inference producer 740.

At S802, inference producer 740 replies with a response or confirmation.

At S803, the inference producer 740 performs inferencing (e.g. performs predictions), e.g. because triggered by another request or subscription coming from a NF to the same NWDAF AnLF (inference producer 740). For example the request could be from an inference consumer 745.

At S804, in a variant "B2" where the query function 750 is located at inference producer 740, the inference producer 740 queries or filters the inferred data samples.

Then, at S805, the inference producer 740 sends the inferred data samples (i.e. in response to the request at S801) to ADRF 760.

Since the inferred data samples are not send directly to training producer 742, at S806 the inference producer 740 sends an active learning notification to training producer 742. This notification serves to inform the training producer 742 so that the training producer 742 can fetch the needed data from ADRF 760.

At S807 the training producer 742 requests inference data from ADRF 760.

In response, at S808 the training producer 742 collects inference data from data storage 760.

At S809, in a variant "B1" where the query function is located at the training producer 742, the training producer 742 queries and performs filtering of the inference data collected at S808. As mentioned above, the filtering at S809 may be in addition to or alternative to the filtering at S804.

At S810 the training producer 742 can request annotations from data provider 746 for (possibly filtered) data samples.

At S811 the training producer 742 receives annotations for those data samples.

As shown at S812, the training producer 742 then performs re-training of the ML model using the data samples that have been provided by the inference producer 740 and the respective annotations that have been provided by data provider 746 for these data samples.

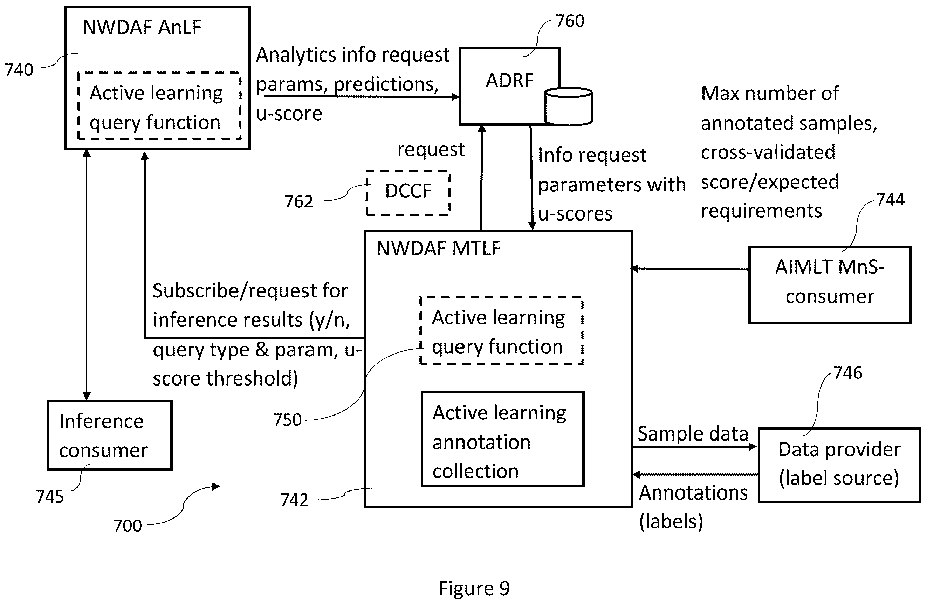

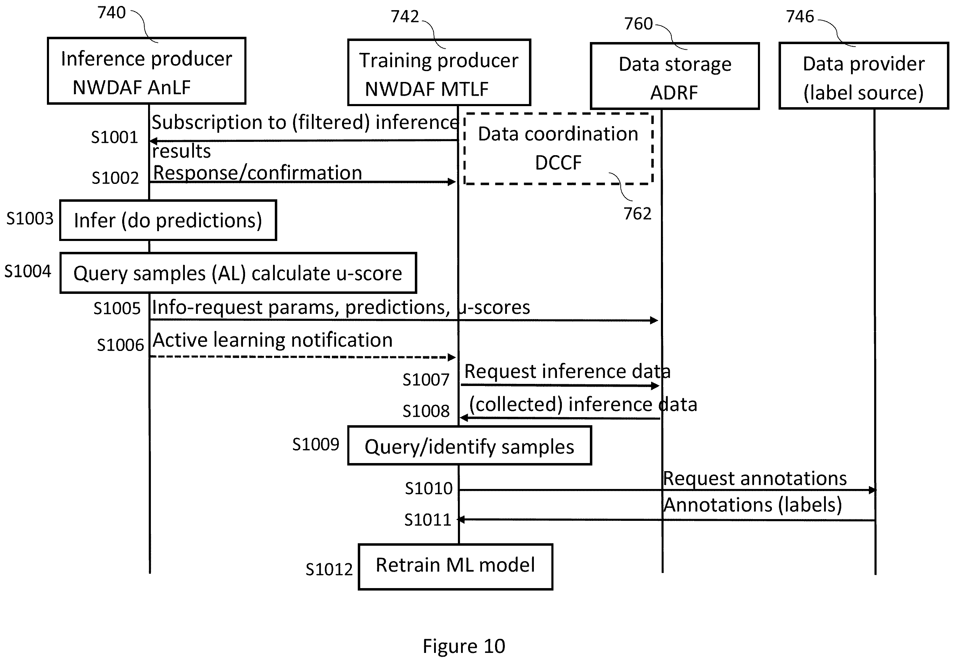

Figures 9 and 10 show a further example. The structure of the system in Figure 9 is similar to that shown in Figure 7, and like reference numerals are used to represent like structures / features. The signaling shown in Figure 10 is similar to that in the example of Figure 8. A difference is that instead of inference data itself being forwarded from the inference producer 740 to the data storage 760 (see S805 in Figure 8), only "request parameters" information is referenced or forwarded at the equivalent step (see S1005). The "request parameters" information provides information of or pointers to the ADRF 760 of which data is to be used for inference. This reduces data transfer load. The signaling is described in more detail with respect to Fig. 10.

At S1001, the training producer 742 sends a subscription request for inference data to inference producer 740.

At S1002, inference producer 740 replies with a response or confirmation.

At S1003, the inference producer 740 performs inferencing (e.g. does predictions).

At S1004, the inference producer 740 performs active learning (e.g. using query function 750), and the inference producer 740 queries or filters the inferred data samples. At this stage the inference producer 740 may also calculate a u-score for each sample.

Then, at S1005, the inference producer 740 causes inference data to be stored at ADRF 762, e.g. triggered by a request originated from a NF to NWDAF AnLF. It is noted that this information may include a u-score for the data. As mentioned previously, an "information request" parameter is sent from inference producer 740 to ADRF 760, which indicates which data is to be used for inference.

At S1006 the inference producer 740 sends an active learning notification to training producer 742. This notification informs the training producer about new (possibly filtered) data samples, by also giving the information request parameters. Then the training producer 742 can also read respective data from ADRF 760, when needed. Accordingly in some examples it is not the inference data itself that is forwarded to the training producer, but the respective pointer(s) to this data located in ADRF. This may reduce signalling overhead.

At S1007 the training producer 742 requests inference data from ADRF 760.

In response, at S1008 the training producer 742 collects inference data from data storage 760.

At S1009, the training producer 742 queries and performs filtering of the inference data collected at S1008. The filtering at S1009 may be in addition to or alternative to the filtering at S1004.

At S1010 the the training producer 742 can request annotations from data provider 746 for (possibly filtered) data samples.

At S1011 the training producer 742 receives annotations for those data samples.

As shown at S1012, the training producer 742 then performs re-training of the ML model using the data samples that have been provided by the inference producer 740.

It will be understood from the foregoing that the described examples may reduce the annotation effort and thus the ML model re-training effort, during a re-training cycle. Deploying AL and filtering the samples (for example down to the most useful samples for re-training), reduces the number of samples that are needed in a re-training cycle and also reduces the number of samples that need to be sent to a data provider (such as an expert) for annotation. Therefore, the amount of signaling within the system may also be reduced. In some examples, the entity performing inference (e.g. NWDAF AnLF) can notify the entity performing training (e.g. NWDAF MTLF) that there are sufficient new supporting data samples for re-training. In some examples the entity performing inference may also advise the entity performing training when the ML model should be re-trained. In some examples, a consumer of the analytical service or results (e.g. MnS consumer) can set targets or other parameters, and these settings can be used in controlling the AL cycle. For example a target could be an accuracy of 95%, or a maximum number of samples to be annotated ("annotation budget") e.g. 100. As described, the inference data to be reported can be reduced by specifying a "feature set". A feature set may include data items forming a data sample. For example, features forming a feature set could be "RSSI; speed; data rate".

It will be noted that the present disclosure can be considered as an add-on or improvement to existing AL functionality. In some examples, the disclosure relates to the way that information is extracted from AL (e.g. by filtering). Thus, in some examples the actual AL algorithms for performing the AL are not the focus of the disclosure. For example, the AL algorithms may be network vendor specific.

In some variations, multiple interface stages can signal and/or report data samples to be used for training (e.g. interfaces in any one or more of NWDAF AnLF, NWDAF MTLF, ADRF, etc.).

In some examples, the execution of the inference by NWDAF AnLF is triggered by a Network Data Analytics request or subscription coming from one or more NFs (e.g. inference consumer 445/745). In some examples the subscription of the Active Learning enabled Training function is only re-using the inference results and should not trigger the inference, if this is the only request or subscription for inference results. It will therefore be understood that in some examples, although the training producer 442 has subscribed to the inference producer 440 for data samples, it is the request from the inference consumer 445 for data samples which triggers the inference at the inference producer 440. Since the inference producer 440 obtains the data samples (according to inference consumer request) it is particularly efficient to also send these data samples to the training producer 442 for re-training of the model, if the data samples are in accordance with data samples that the training producer 442 wants (e.g. are in accordance with a feature set). Therefore it may be considered that there is dual-use of the inferred data samples: (i) for sending to the inference consumer 445 or 745 that requested the samples; and (ii) for sending to the training producer 440 or 740 for training or re-training of the ML model.

However, in a variation, the execution of the inference could be triggered also when only a subscription from the Active Learning Training function is issued, so that the inference is performed for the sake of getting (filtered) training data and/or for detections of data drifts, supporting an efficient re-training.

In some examples, the training stage (e.g. at the training producer such as MTLF) may employ incremental learning. In incremental learning, only new samples are used for re-training, instead of all available training samples. In some examples, responses from the query function at the inference and/or training stage can be used as an indication that there has been "drift" (e.g. concept drift, where there is a change in the relationship between input and output over time) in the data. Where concept drift is detected, this may indicate that re-training is required.

It will be appreciated that the use of AL in the present disclosure may allow a faster convergence to a maximum achievable performance in re-training/model-adaptation scenarios. The complexity of the training process may be reduced due to lower number of data samples to be used in the re-training, which may be in particular helpful when training has to be done in an environment with restricted computation resources, such as a UE. The AL query function being logically close to the inference function may also significantly reduce data signaling load, and can provide a helpful trigger when re-training is advised with enough new & decisive training samples.

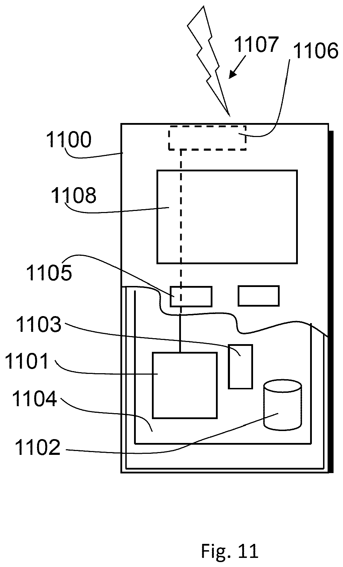

A possible wireless communication device will now be described in more detail with reference to Figure 11 showing a schematic, partially sectioned view of a communication device 1100. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

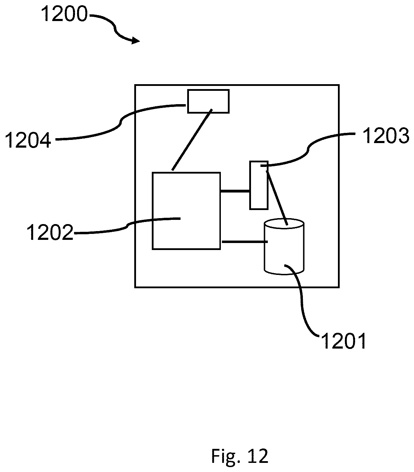

The wireless device 1100 may receive signals over an air or radio interface 1107 via appropriate apparatus for receiving and may transmit signals via appropriate apparatus for transmitting radio signals. In Figure 12, transceiver apparatus is designated schematically by block 1106. The transceiver apparatus 1206 may be provided for example by means of a radio part and associated antenna arrangement. The antenna arrangement may be arranged internally or externally to the wireless device.

A wireless device is typically provided with at least one data processing entity 1101, at least one memory 1102 and other possible components 1103 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 1104. The user may control the operation of the wireless device by means of a suitable user interface such as key pad 1105, voice commands, touch sensitive screen or pad, combinations thereof or the like. A display 1108, a speaker and a microphone can be also provided. Furthermore, a wireless communication device may comprise appropriate connectors (either wired or wireless) to other devices and/or for connecting external accessories, for example hands-free equipment, thereto.

Figure 12 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 1200 can be arranged to provide control on communications in the service area of the system. The control apparatus 1200 comprises at least one memory 1201, at least one data processing unit 1202, 1203 and an input/output interface 1204. Via the interface the control apparatus can be coupled to a receiver and a transmitter of the base station. The receiver and/or the transmitter may be implemented as a radio front end or a remote radio head. For example the control apparatus 1200 or processor 1201 can be configured to execute an appropriate software code to provide the control functions.

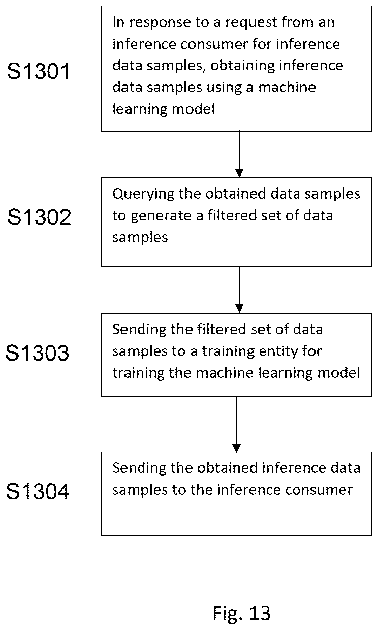

Figure 13 is a method flow chart according to an example. The method flow chart of Figure 13 may be carried out by an apparatus. For example the apparatus may comprise an inference producer (e.g. inference producer 440/740).

At S1301, the method comprises, in response to a request from an inference consumer for inference data samples, obtaining inference data samples using a machine learning model.

At S1302, the method comprises querying the obtained data samples to generate a filtered set of data samples.

At S1303 the method comprises sending the filtered set of data samples to a training entity for training the machine learning model.

At S1304 the method comprises sending the obtained inference data samples to the inference consumer.

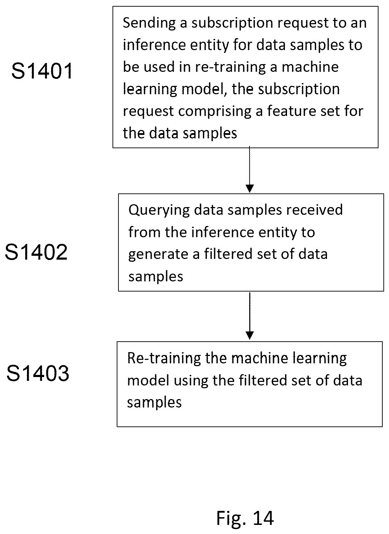

Figure 14 is a method flow chart according to an example. The method flow chart of Figure 14 may be carried out by an apparatus. For example the apparatus may comprise a training producer (e.g. training producer 442/742).

At S1401, the method comprises sending a subscription request to an inference entity for data samples to be used in re-training a machine learning model, the subscription request comprising a feature set for the data samples.

At S1402, the method comprises querying data samples received from the inference entity to generate a filtered set of data samples.

At S1403, the method comprises re-training the machine learning model using the filtered set of data samples.

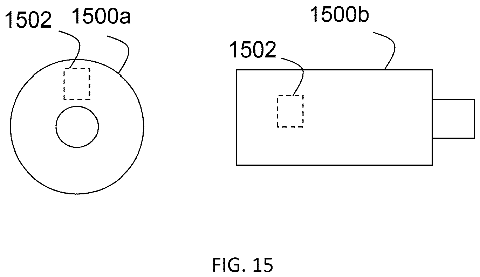

Figure 15 shows a schematic representation of non-volatile memory media 1500a (e.g. computer disc (CD) or digital versatile disc (DVD)) and 1500b (e.g. universal serial bus (USB) memory stick) storing instructions and/or parameters 1502 which when executed by a processor allow the processor to perform one or more of the steps of the methods of Figures 13 to 14. In general, the various embodiments may be implemented in hardware or special purpose circuits, software, logic or any combination thereof. Some aspects of the disclosure may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following: (a) hardware-only circuit implementations (such as implementations in only analog and/or digital circuitry) and(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

## Claims

1. A method comprising:
in response to a request from an inference consumer for inference data samples, obtaining inference data samples using a machine learning model;
querying the obtained data samples to generate a filtered set of data samples;
sending the filtered set of data samples to a training entity for training the machine learning model; and
sending the obtained inference data samples to the inference consumer.

2. A method according to claim 1, comprising receiving a subscription request from the training entity which defines one or more features, and the querying the obtained data samples comprises filtering for data samples that are in accordance with the one or more features.

3. A method according to claim 1 or claim 2, wherein the subscription request comprises an indication of a query function to be used for the querying.

4. A method according to any of claims 1 to 3, comprising sending an indication of supported active learning functionality to the training entity, in response to the subscription request.

5. A method according to any of claims 1 to 4, comprising sending to the training entity an indication of how useful each data sample is expected to be for re-training of the machine learning model.

6. A method according to any of claims 1 to 5, comprising notifying the training entity when enough new data samples are available such that re-training of the machine learning model is advised.

7. A method according to any of claims 1 to 6, comprising performing uncertainty sampling, and wherein the querying the obtained data samples comprises filtering for samples that equal or exceed an uncertainty threshold.

8. A method comprising:
sending a subscription request to an inference entity for data samples to be used in re-training a machine learning model, the subscription request comprising a feature set for the data samples;
querying data samples received from the inference entity to generate a filtered set of data samples; and
re-training the machine learning model using the filtered set of data samples.

9. A method according to claim 8, wherein the subscription request comprises an indication of a query function to be used by the inference entity for obtaining the data samples.

10. A method according to any of claims 8 to 9, comprising communicating with a label source entity, for labelling of data samples.

11. A method according to any of claims 8 to 10, comprising receiving information of parameters comprising one or more of: maximum number of annotated samples to be generated; minimum number of annotated samples to be generated; performance target of the machine learning model; an indication of whether the re-training of the machine learning model should be forced; a list of addresses or identifiers indicating inference producers deploying an up-to-date version of the machine learning model.

12. A method according to any of claims 8 to 11, comprising receiving the data samples produced by the inference entity either directly from the inference entity, or via a data storage function.

13. A method according to claim 12, comprising receiving information indicating where in the data storage function the data samples are stored.

14. An apparatus comprising means for performing the method of any of claims 1 to 7.

15. An apparatus comprising means for performing the method of any of claims 8 to 13.

16. A computer program comprising instructions, which, when executed by an apparatus, cause the apparatus to perform the method of any of claims 1 to 7.

17. A computer program comprising instructions, which, when executed by an apparatus, cause the apparatus to perform the method of any of claims 8 to 13.
